# EUROPEAN PATENT APPLICATION

(11) **EP 3 326 784 A1**
(43) Date of publication of application: **30.05.2018**
(21) Application number: 16827514.7
(22) Date of filing: 03.06.2016
(51) Int. Cl.: B29C 63/26, C08F 263/08, C08F 290/06

(54) **COMPOSITION FOR LINING**

(30) Priority: 21.07.2015 JP 2015143737
(71) Applicant: Osaka Soda Co., Ltd., Osaka-shi, Osaka 550-0011 (JP)
(72) Inventor: HASHIDATE, Suguru, Osaka-shi Osaka 550-0011 (JP); IWASA, Naruhito, Osaka-shi Osaka 550-0011 (JP); UMAKOSHI, Hideaki, Osaka-shi Osaka 550-0011 (JP)
(74) Representative: Vossius & Partner Patentanwälte Rechtsanwälte mbB
(86) International application number: PCT/JP2016/066613
(87) International publication number: WO 2017/013950

(57) **Abstract**

The present invention aims to provide a lining composition which overcomes the problems such as environmental problems (e.g. marine pollution) and VOC problem and which has a good cure rate. We have found that this can be achieved by a composition containing a vinyl ester resin as a prepolymer component and an aliphatic or alicyclic polyfunctional allyl ester compound as a crosslinking agent.

## Description

### TECHNICAL FIELD

The present invention relates to a lining composition. Linings are used, for example, to rehabilitate the inner surface of tubular moldings or rectangular pipes in sewage treatment plants.

### BACKGROUND ART

Most present-day building structures are constructed using concrete or steel as structural materials. However, disadvantageously, these concreate and steel are degraded over time. These days, linings are used to prevent degradation of structures formed from concrete or steel, such as buildings, tunnels, bridge piers, drainages, water or sewer pipes, or gas pipes, or to rehabilitate degraded structures.

A specific exemplary lining method for lining pipes, such as gas pipes, water pipes, or sewer pipes, may include inserting a lining material containing a thermosetting resin into an existing pipe and curing the lining material with warm water, thereby lining the inside of the pipe (see Patent Literature 1).

Examples of the resin used for the lining include epoxy resins, urethane resins, unsaturated polyester resins, and vinyl ester resins. Among these, unsaturated polyester resins or vinyl ester resins are mainly used in view of curability or economic efficiency. These resins are compositions containing a prepolymer component and a crosslinking agent, which are cured by radical polymerization.

Known resin compositions such as unsaturated polyester resin compositions and vinyl ester resin compositions usually contain styrene as a crosslinking agent (see Patent Literature 2). However, since it causes environmental problems such as marine pollution and volatile organic compound (VOC) problem, there is a need to develop crosslinking agents other than styrene.

Diallyl phthalate monomer can be used as a crosslinking agent other than styrene. However, since it takes a relatively long time to sufficiently cure, further studies are needed.

### CITATION LIST

### PATENT LITERATURE

Patent Literature 1: JP 2003-165158 A
Patent Literature 2: Japanese Patent No. 2981330

### SUMMARY OF INVENTION

### TECHNICAL PROBLEM

The present invention aims to provide a lining resin composition which overcomes the problems such as environmental problems (e.g. marine pollution) and VOC problem and which has a good cure rate.

### SOLUTION TO PROBLEM

The inventors of the present invention have found that the above problems can be solved by a lining composition containing a vinyl ester resin as a prepolymer component and a polyfunctional allyl ester selected from aliphatic polyfunctional allyl esters and alicyclic polyfunctional allyl esters as a crosslinking agent.

Specifically, the present invention may be described as follows.
Item 1: A lining composition, containing: a vinyl ester resin; and a polyfunctional allyl ester selected from aliphatic polyfunctional allyl esters and alicyclic polyfunctional allyl esters.
Item 2: The lining composition according to item 1, wherein the polyfunctional allyl ester selected from aliphatic polyfunctional allyl esters and alicyclic polyfunctional allyl esters is a polyfunctional allyl ester represented by the following formula (1):

   Z(̵COOCH₂-CH=CH₂)ₙ ... (1)

   wherein n represents an integer of 2 to 4, and z represents an n-valent aliphatic hydrocarbon group or an n-valent alicyclic hydrocarbon group, provided that z represents a bond only when n is 2.
Item 3: The lining composition according to item 1 or 2, wherein the polyfunctional allyl ester selected from aliphatic polyfunctional allyl esters and alicyclic polyfunctional allyl esters is any one of diallyl succinate, diallyl fumarate, diallyl maleate, diallyl itaconate, diallyl adipate, or diallyl cyclohexanedicarboxylate.
Item 4: The lining composition according to any one of items 1 to 3, wherein the lining composition contains, per 100 parts by weight of the vinyl ester resin, at least 20 parts by weight but not more than 80 parts by weight of the polyfunctional allyl ester selected from aliphatic polyfunctional allyl esters and alicyclic polyfunctional allyl esters.
Item 5: A lining material, including a substrate impregnated with the lining composition according to any one of items 1 to 4.

### ADVANTAGEOUS EFFECTS OF INVENTION

The composition of the present invention contains a vinyl ester resin and a polyfunctional allyl ester selected from aliphatic polyfunctional allyl esters and alicyclic polyfunctional allyl esters. Such a composition is suitable as a lining composition because it does not cause the problems such as environmental problems (e.g. marine pollution) and VOC problem, has excellent handleability due to its low viscosity, and shows a good cure rate and good storage stability.

### DESCRIPTION OF EMBODIMENTS

The lining composition will be described in detail below. The lining composition of the present invention contains at least a vinyl ester resin and a polyfunctional allyl ester selected from aliphatic polyfunctional allyl esters and alicyclic polyfunctional allyl esters.

The vinyl ester resin used in the lining composition of the present invention is produced by reacting an epoxy resin with an unsaturated monobasic acid.

Examples of the epoxy resin include glycidyl ethers of phenols such as bisphenol-type epoxy resins (e.g. bisphenol A-type epoxy resins and bisphenol F-type epoxy resins), novolac-type epoxy resins (e.g. phenol novolac-type epoxy resins and cresol novolac-type epoxy resins), and brominated epoxy resins thereof; glycidyl ethers of polyhydric alcohols such as dipropylene glycol diglycidyl ether, trimethylolpropane triglycidyl ether, diglycidyl ethers of alkylene oxide adducts of bisphenol A, and diglycidyl ethers of hydrogenated bisphenol A; alicyclic epoxy resins such as 3,4-epoxy-6-methylcyclohexylmethyl-3,4-epoxy-6-methylcyclohexane carboxylate and 1-epoxyethyl-3,4-epoxycyclohexane; glycidyl esters such as phthalic acid diglycidyl ester, tetrahydrophthalic acid diglycidyl ester, diglycidyl p-oxybenzoate, and dimer acid glycidyl esters; glycidyl amines such as tetraglycidyl diaminodiphenylmethane, tetraglycidyl-m-xylenediamine, triglycidyl-p-aminophenol, and N,N-diglycidylaniline; and heterocyclic epoxy resins such as 1,3-diglycidyl-5,5-dimethylhydantoin and triglycidyl isocyanurate. These epoxy resins may be used alone, or two or more of these may be used in combination. Among these, bisphenol-type epoxy resins are preferred, with bisphenol A-type epoxy resins being more preferred.

Examples of the unsaturated monobasic acid include acrylic acid, methacrylic acid, crotonic acid, cinnamic acid, acrylic acid dimers, monomethyl maleate, monomethyl fumarate, monocyclohexyl fumarate, and sorbic acid. These acids may be used alone, or two or more of these may be used in combination. Among these, acrylic acid or methacrylic acid is preferred.

The vinyl ester resin preferably has a weight average molecular weight (Mw) of 2,000 to 500,000, more preferably 4,000 to 100,000, though not limited thereto. The vinyl ester resin preferably has a number average molecular weight (Mn) of 250 to 5,000, more preferably 500 to 3,000, though not limited thereto. Herein, the terms "weight average molecular weight" and "number average molecular weight" each refer to a value measured by gel permeation chromatography (GPC system available from Shimadzu Corporation) at room temperature using a polystyrene standard calibration curve.

The vinyl ester resin is not particularly limited, and may be a single species or a combination of two or more species. It is preferably a bisphenol-type vinyl ester resin formed using a bisphenol-type epoxy resin as the epoxy resin, and more preferably a bisphenol A-type vinyl ester resin formed using a bisphenol A-type epoxy resin as the epoxy resin, because then the effects of the present invention can be more suitably achieved, and the lining composition can have a reduced viscosity and can impregnate better into substrates.

The lining composition of the present invention contains a polyfunctional allyl ester selected from aliphatic polyfunctional allyl esters and alicyclic polyfunctional allyl esters, preferably a polyfunctional allyl ester represented by the following formula (1). The polyfunctional allyl ester selected from aliphatic polyfunctional allyl esters and alicyclic polyfunctional allyl esters may be a single species or a combination of two or more species. Herein, the term "polyfunctional allyl ester" refers to a compound having two or more allyl ester groups (-COOCH₂-CH=CH₂); the term "aliphatic polyfunctional allyl ester" refers to a compound having an aliphatic hydrocarbon group and two or more allyl ester groups; and the term "alicyclic polyfunctional allyl ester" refers to a compound having an alicyclic hydrocarbon group and two or more allyl ester groups. Herein, the concept of the aliphatic polyfunctional allyl ester includes diallyl oxalate in which two allyl ester groups are directly bound.

Z(̵COOCH₂-CH=CH₂)ₙ ... (1)

In the formula, n represents an integer of 2 to 4, and z represents an n-valent aliphatic hydrocarbon group or an n-valent alicyclic hydrocarbon group, provided that z represents a bond only when n is 2.

In formula (1), n is preferably 2 or 3, particularly preferably 2.

The n-valent aliphatic hydrocarbon group in formula (1) preferably has 1 to 18 carbon atoms, more preferably 2 to 12 carbon atoms, still more preferably 2 to 6 carbon atoms, particularly preferably 2 to 4 carbon atoms, most preferably 2 or 3 carbon atoms.

The n-valent aliphatic hydrocarbon group may be a saturated n-valent aliphatic hydrocarbon group or may partially contain an unsaturated bond. Preferably, the n-valent aliphatic hydrocarbon group contains an unsaturated bond because in this case the amount of remaining unreacted crosslinking agents (polyfunctional allyl esters) can be reduced so that the resulting cured product has better physical properties.

The n-valent aliphatic hydrocarbon group may have a branched structure, but is preferably a linear hydrocarbon group having no branched structure.

The n-valent aliphatic hydrocarbon group may have a substituent such as a C1-C6 alkoxy group, a halogen atom, an allyl group, a vinyl group, or a hydroxy group, but preferably has no substituent other than the n number of allyl ester groups.

Examples of divalent aliphatic hydrocarbon groups include C1-C18 alkylene groups, alkenylene groups, and alkynylene groups, with alkenylene groups being preferred. Examples of alkenylene groups include vinylene, 1-propenylene, 2-propenylene, 1-butenylene, 2-butenylene, 1-pentenylene, 2-pentenylene, 1-hexenylene, 2-hexenylene, and 1-octenylene groups, with a vinylene group being preferred among these.

The n-valent alicyclic hydrocarbon group in formula (1) preferably has 3 to 18 carbon atoms, more preferably 4 to 12 carbon atoms, still more preferably 4 to 10 carbon atoms. In particular, all carbon atoms of the alicyclic hydrocarbon group preferably form a ring structure. In other words, the n-valent alicyclic hydrocarbon group preferably forms a 3- to 18-membered ring, more preferably a 4- to 12-membered ring, and particularly preferably a 4- to 10-membered ring.

The n-valent alicyclic hydrocarbon group may be a saturated n-valent alicyclic hydrocarbon group or may partially contain an unsaturated bond. Preferably, it is a saturated n-valent alicyclic hydrocarbon group. Herein, the term "alicyclic" means having a non-aromatic ring structure, and the alicyclic hydrocarbon group refers to a hydrocarbon group having a non-aromatic ring structure.

The n-valent alicyclic hydrocarbon group may have a substituent such as a C1-C6 alkyl group, a C1-C6 alkoxy group, a halogen atom, an allyl group, a vinyl group, or a hydroxy group, but preferably has no substituent other than the n number of allyl ester groups.

In formula (1), when z is a bond, the polyfunctional allyl ester of formula (1) is diallyl oxalate.

In formula (1), z is preferably an n-valent aliphatic hydrocarbon group.

Examples of the polyfunctional allyl ester of formula (1) include aliphatic polyfunctional allyl esters such as diallyl oxalate, diallyl malonate, diallyl succinate, diallyl glutarate, diallyl adipate, diallyl pimelate, diallyl suberate, diallyl azelate, diallyl sebacate, diallyl fumarate, diallyl maleate, triallyl citrate, and diallyl itaconate; and alicyclic polyfunctional allyl esters, including compounds represented by formulas (2) to (9) below, such as tetraallyl 1,2,3,4-butanetetracarboxylate, diallyl cyclobutanedicarboxylate, diallyl cyclobutenedicarboxylate, diallyl cyclohexanedicarboxylate (diallyl hexahydrophthalate), and diallyl tetrahydrophthalate. The polyfunctional allyl ester is preferably diallyl succinate, diallyl fumarate, diallyl adipate, diallyl maleate, diallyl itaconate, diallyl cyclohexanedicarboxylate (diallyl hexahydrophthalate), or diallyl tetrahydrophthalate.

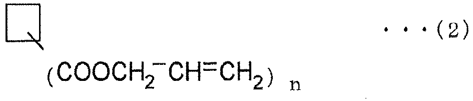

In the formula, n represents an integer of 2 to 4.

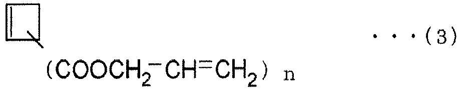

In the formula, n represents an integer of 2 to 4.

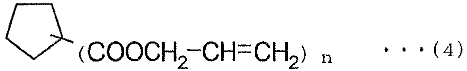

In the formula, n represents an integer of 2 to 4.

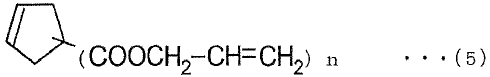

In the formula, n represents an integer of 2 to 4.

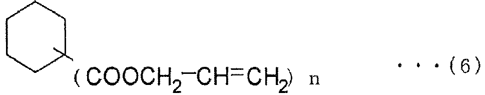

In the formula, n represents an integer of 2 to 4.

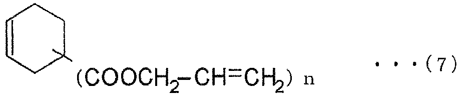

In the formula, n represents an integer of 2 to 4.

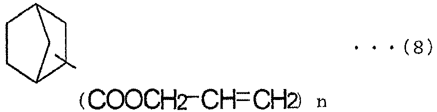

In the formula, n represents an integer of 2 to 4.

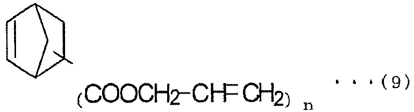

In the formula, n represents an integer of 2 to 4.

The definition of n in formulas (2) to (9) is the same as in formula (1).

In formulas (2) to (9), there may be a bridge within the ring structure. Examples of the compounds with a bridge within the ring structure include adamantane and norbornane.

The positions of COOCH₂-CH=CH₂ substituents on the ring in each of formulas (2) to (9) may be any combination and may be a mixture of different combinations. In particular, when two COOCH₂-CH=CH₂ groups are bound to a six-membered ring, the two COOCH₂-CH=CH₂ groups may be in the ortho, meta, or para orientation, preferably in the ortho or para orientation.

Examples of the alicyclic polyfunctional allyl ester include diallyl cyclobutanedicarboxylate, diallyl cycloheptanedicarboxylate, diallyl cyclohexanedicarboxylate (diallyl hexahydrophthalate), diallyl norbornanedicarboxylate, diallyl cyclobutenedicarboxylate, diallyl cycloheptenedicarboxylate, diallyl cyclohexenedicarboxylate (diallyl tetrahydrophthalate), diallyl norbornenedicarboxylate, 3-methyl-hexahydro-1,2-diallyl phthalate, 4-methyl-hexahydro-1,2-diallyl phthalate, 3-methyl-1,2,3,6-tetrahydro-1,2-diallyl phthalate, 4-methyl-1,2,3,6-tetrahydro-1,2-diallyl phthalate, 3,6-endomethylene-3-methyl-1,2,3,6-tetrahydro-1,2-diallyl phthalate, 3,6-endomethylene-4-methyl-1,2,3,6-tetrahydro-1,2-diallyl phthalate, diallyl 4-cyclohexene-1,2-dicarboxylate, diallyl 2-cyclohexene-1,2-dicarboxylate, and tetraallyl 1,2,3,4-butanetetracarboxylate. Among these, diallyl 1,2-cyclohexanedicarboxylate, diallyl 1,3-cyclohexanedicarboxylate, diallyl 1,4-cyclohexanedicarboxylate, and diallyl norbornanedicarboxylate are preferred.

The polyfunctional allyl ester selected from aliphatic polyfunctional allyl esters and alicyclic polyfunctional allyl esters in the present invention can be produced by reacting a carboxylic acid compound represented by formula (10) below or an acid anhydride thereof with an allyl halide or allyl alcohol in the presence of, for example, an acidic substance, a basic substance, a catalyst, and/or a solvent. The carboxylic acid compound of formula (10) is available as a reagent or an industrial chemical.

Z(̵COOH)ₙ ... (10)

In the formula, n and z are as defined in formula (1).

Examples of the allyl halide include allyl chloride, allyl bromide, and allyl iodide. The amount of the allyl halide to be used is not particularly limited, but is usually preferably in the range of 2 to 20 equivalents relative to the amount of the carboxylic acid compound of formula (10). In view of reaction rate and volume efficiency, the amount is more preferably in the range of 2.3 to 10 equivalents. The allyl halide compound is available as a reagent or an industrial chemical.

The allyl alcohol is available as a reagent or an industrial chemical. The amount of the allyl alcohol to be used is not particularly limited, but is usually preferably in the range of 2 to 10 equivalents, more preferably 2 to 5 equivalents relative to the amount of the carboxylic acid compound of formula (10).

Examples of the acidic substance include p-toluenesulfonic acid, dodecylbenzenesulfonic acid, and sulfuric acid. The amount of the acidic substance to be used is preferably in the range of 0.001 to 0.1 equivalents, more preferably 0.005 to 0.05 equivalents relative to the amount of the carboxylic acid compound of formula (10).

Typical examples of the basic substance include alkali metal hydroxides such as sodium hydroxide and potassium hydroxide; alkali metal hydrides such as sodium hydride and potassium hydride; carbonates such as sodium carbonate and potassium carbonate; hydrogen carbonates such as sodium hydrogen carbonate and potassium hydrogen carbonate; and alcoholates. Organic bases such as quaternary ammonium compounds, aliphatic amines, and aromatic amines may also be used. The amount of the basic substance to be used is preferably in the range of 0.5 to 30 equivalents, more preferably 2 to 15 equivalents relative to the amount of the carboxylic acid compound of formula (10).

Examples of the catalyst include transition metals such as copper, iron, cobalt, nickel, chromium, and vanadium, and transition metal salts. Copper compounds, among others, can be suitably used.

The copper compounds are not particularly limited, and most copper compounds may be used. Preferred examples include cuprous chloride, cuprous bromide, cuprous oxide, cuprous iodide, cuprous cyanide, cuprous sulfate, cupric sulfate, cupric chloride, cupric hydroxide, cupric bromide, cupric phosphate, cuprous nitrate, cupric nitrate, copper carbonate, cuprous acetate, and cupric acetate. Among these, cuprous chloride, cupric chloride, cuprous bromide, cupric bromide, cuprous iodide, copper sulfate, and cupric acetate are particularly suitable because they are readily available and inexpensive.

The reaction may be carried out in the presence or absence of a solvent. Any solvent which does not adversely affect the reaction may be used. Examples include aromatic hydrocarbons such as benzene, toluene, and xylene; saturated aliphatic hydrocarbons such as hexane, heptane, octane, cyclohexane, and methylcyclohexane; ethers such as diethyl ether, diethylene glycol dimethyl ether, 1,4-dioxane, and tetrahydrofuran; esters such as ethyl acetate and butyl acetate; halogenated hydrocarbons such as methylene chloride, chloroform, and carbon tetrachloride; dimethylformamide, N-methylpyrrolidone, and sulfolane. These solvents may be used alone, or two or more of these may be used in combination. The amount of the solvent, if used, is not particularly limited, but is usually preferably in the range of 0.01 to 20 times, more preferably 0.1 to 10 times the weight of the carboxylic acid compound of formula (10). The reaction allows for efficient production of the polyfunctional allyl ester selected from aliphatic polyfunctional allyl esters and alicyclic polyfunctional allyl esters, even without using any solvent.

Particularly in the case where an aqueous solution of the basic substance is used in the reaction, a phase-transfer catalyst is preferably used to promote the reaction. Any phase-transfer catalyst may be used, and examples include quaternary ammonium salts such as trioctylmethylammonium chloride, tetrabutylammonium chloride, and tetrabutylammonium bromide; phosphonium salts such as tetrabutylphosphonium chloride; and crown ethers such as 15-crown-5 and 18-crown-6. The amount of the phase-transfer catalyst, if used, is usually preferably in the range of 0.001 to 1 equivalent, more preferably 0.01 to 0.4 equivalents relative to the amount of the carboxylic acid compound of formula (10).

The reaction temperature is usually preferably in the range of -30°C to 150°C, more preferably -10°C to 120°C, in order to provide a sufficient reaction rate and to effectively suppress side reactions to obtain a high yield. The reaction time is preferably in the range of 10 minutes to 15 hours. In order to suppress side reactions, the reaction time is preferably in the range of 10 minutes to 10 hours.

The reaction is preferably carried out in an inert gas atmosphere, such as nitrogen or argon. Moreover, the reaction may be carried out either under atmospheric pressure or under higher pressure but, from a production facility standpoint, it is preferably carried out under atmospheric pressure. The reaction may be conducted, for example, by introducing raw materials all at once or in portions into a stirring reactor and allowing the reaction to proceed at a predetermined temperature for a predetermined time as described above at paragraph [0034].

After completion of the reaction, the reaction mixture may be neutralized and then optionally washed with, for example, water or saturated saline, followed by concentration and then purification by usual procedures for purifying organic compounds, such as distillation or column chromatography, thereby obtaining a highly purified polyfunctional allyl ester selected from aliphatic polyfunctional allyl esters and alicyclic polyfunctional allyl esters.

The lining composition of the present invention preferably contains the polyfunctional allyl ester selected from aliphatic polyfunctional allyl esters and alicyclic polyfunctional allyl esters in an amount of at least 20 parts by weight, more preferably at least 25 parts by weight, particularly preferably at least 35 parts by weight, but preferably not more than 80 parts by weight, more preferably not more than 75 parts by weight, particularly preferably not more than 70 parts by weight, per 100 parts by weight of the vinyl ester resin.

The lining composition of the present invention may optionally contain a polyfunctional (meth) acrylate in addition to the polyfunctional allyl ester selected from aliphatic polyfunctional allyl esters and alicyclic polyfunctional allyl esters. The incorporation of a polyfunctional (meth)acrylate can further increase the cure rate.

Herein, the term "polyfunctional (meth)acrylate" refers to a compound having two or more (meth)acrylate groups. The term "(meth)acrylate" means either acrylate or methacrylate or both.

Examples of the polyfunctional (meth)acrylate include neopentyl glycol diacrylate, neopentyl glycol dimethacrylate, trimethylolpropane trimethacrylate, ethylene glycol dimethacrylate, diethylene glycol dimethacrylate, 1,3-butylene glycol dimethacrylate, 1,6-hexanediol dimethacrylate, and 1,6-hexanediol diacrylate. These polyfunctional (meth) acrylates may be used alone, or two or more of these may be used in combination.

The polyfunctional (meth)acrylate preferably has 2 to 6 (meth)acrylate groups, more preferably 2 to 4 (meth)acrylate groups.

The polyfunctional (meth)acrylate is preferably a polyfunctional methacrylate because in this case the amount of remaining unreacted crosslinking agents (polyfunctional allyl esters and polyfunctional (meth)acrylates) can be reduced so that the resulting cured product has better physical properties.

The lining composition of the present invention preferably contains the polyfunctional (meth)acrylate in an amount of at least 5 parts by weight, more preferably at least 10 parts by weight, particularly preferably at least 12 parts by weight, but preferably not more than 80 parts by weight, more preferably not more than 75 parts by weight, particularly preferably not more than 70 parts by weight, per 100 parts by weight of the vinyl ester resin.

The lining composition of the present invention may contain any thermal polymerization initiator or photopolymerization initiator.

The thermal polymerization initiator is not particularly limited, but is preferably a peroxide compound or an azo compound. Specific examples include peroxide compounds such as: diacyl peroxides, e.g., benzoyl peroxide, lauroyl peroxide; dialkyl peroxides, e.g., dicumyl peroxide, di-tert-butyl peroxide; peroxy carbonates, e.g., diisopropyl peroxydicarbonate, bis(4-tert-butylcyclohexyl) peroxydicarbonate; and alkyl peresters, e.g., tert-butyl peroxyoctoate, tert-butyl peroxybenzoate, and azo compounds such as: 1,1'-azobiscyclohexane-1-carbonitrile, 2,2'-azobis-(2,4-dimethylvaleronitrile), 2,2'-azobis-(4-methoxy-2,4-dimethylvaleronitrile), 2,2'-azobis-(methyl isobutyrate), α,α-azobis-(isobutyronitrile), and 4,4'-azobis-(4-cyanovaleric acid). These thermal polymerization initiators may be used alone, or two or more of these may be used in combination.

The lining composition of the present invention preferably contains the thermal polymerization initiator in an amount of at least 0.001 parts by weight, more preferably at least 0.005 parts by weight, still more preferably at least 0.01 parts by weight, particularly preferably at least 0.5 parts by weight, but preferably not more than 10 parts by weight, more preferably not more than 8 parts by weight, particularly preferably not more than 5 parts by weight, per 100 parts by weight of the vinyl ester resin.

The photopolymerization initiator is not particularly limited, but is preferably a benzoin ether compound, a benzophenone compound, an acetophenone compound, or a thioxanthone compound. Examples include benzoin ether compounds such as benzoin alkyl ethers; benzophenone compounds such as benzophenone, benzil, and methylorthobenzoyl benzoate; acetophenone compounds such as benzyl dimethyl ketal, 2,2-diethoxyacetophenone, 2-hydroxy-2-methylpropiophenone, 4-isopropyl-2-hydroxy-2-methylpropiophenone, and 1,1-dichloroacetophenone; and thioxanthone compounds such as 2-chlorothioxanthone, 2-methylthioxanthone, and 2-isopropylthioxanthone.

The photopolymerization initiator may be used together with metallic soaps, metal chelates, anilines, or amines as accelerators. Specific examples include metallic soaps such as cobalt naphthenate, cobalt octylate, zinc octylate, vanadium octylate, copper naphthenate, and barium naphthenate; metal chelates such as vanadium acetylacetate, cobalt acetylacetate, and iron acetylacetonate; anilines such as aniline, N,N-dimethylaniline, N,N-diethylaniline, p-toluidine, N,N-dimethyl-p-toluidine, N,N- bis(2-hydroxyethyl)-p-toluidine, 4-(N,N-dimethylamino)benzaldehyde, 4-[N,N-bis(2-hydroxyethyl)amino]benzaldehyde, 4-(N-methyl-N-hydroxyethylamino)benzaldehyde, N,N-bis(2-hydroxypropyl)-p-toluidine, N-ethyl-m-toluidine, triethanolamine, m-toluidine, diethylenetriamine, pyridine, 4-phenylmorpholine, piperidine, N,N-bis(hydroxyethyl)aniline, and diethanolaniline; and amines such as N,N-substituted-p-toluidine and 4-(N,N-substituted amino) benzaldehyde . These photopolymerization initiators may be used alone, or two or more of these may be used in combination.

The lining composition of the present invention preferably contains the photopolymerization initiator in an amount of at least 0.001 parts by weight, more preferably at least 0.005 parts by weight, particularly preferably at least 0.01 parts by weight, but preferably not more than 10 parts by weight, more preferably not more than 8 parts by weight, particularly preferably not more than 5 parts by weight, per 100 parts by weight of the vinyl ester resin.

The lining composition of the present invention may contain a thickener, a colorant, a plasticizer, a filler, a flame retardant, or other agents as long as the effects of the present invention are not impaired.

The lining method using the lining composition of the present invention is not particularly limited. An exemplary method includes inserting a lining material including a substrate impregnated with the lining composition of the present invention into an existing pipe by means of, for example, fluid pressure, and applying and pressure-bonding the lining material to the inner surface of the pipe, followed by heating or light irradiation to form a reinforced plastic pipe.

Specifically, it is a lining method that involves inserting a lining material into an existing pipe and lining the inside of the pipe, which is characterized by including the steps of: impregnating a substrate with the lining composition of the present invention; inserting the lining material obtained after the impregnation into an existing pipe; and subjecting the inserted lining material to heating or light irradiation to coat the inside of the pipe.

The substrate to be impregnated with the lining composition may be any substrate that can be impregnated with the lining composition of the present invention. Examples include nonwoven fabrics, felts, and chopped strand mats, such as, specifically: polyolefin, polyester, polyamide, aromatic resin, or other nonwoven fabrics; polyester, polyamide, polypropylene, or other felts; and chopped strand mats formed of inorganic fibers such as glass fiber, carbon fiber, and metal fiber, aramid fiber, polyester fiber, vinyl ester fiber, or olefinic fibers such as polyethylene and polypropylene. The nonwoven fabrics, felts, and/or chopped strand mats may be combined to form layers.

The substrate may be impregnated with the lining composition by any method. Contacting the lining composition with the substrate allows the lining composition to impregnate into the substrate. For example, the substrate may be impregnated with the lining composition by dipping the substrate into the lining composition solution.

The lining material of the present invention can be prepared by impregnating the substrate with the lining composition of the present invention. The lining material may have a structure in which one side or both sides of the material are covered with a permeable plastic film such as a polyurethane film.

The step of inserting the lining material obtained after the impregnation into an existing pipe may be carried out by any method, such as those described in, for example, JP 2003-165158 A. Specifically, for example, a flat lining material is folded into a stack and placed in a hermetic container; one end of the material is outwardly folded back and attached to the outer periphery of the open end of an inversion nozzle connected to the hermetic container; and the pipe lining material is inversely inserted into a pipeline by the action of fluid pressure (e.g. hydraulic pressure) on the hermetic container, so that the lining material is pressed onto the inner surface of the pipeline.

In the step of subjecting the inserted lining material to heating or light irradiation to coat the inside of the pipe, the heating or light irradiation may be carried out by any method.

In the case where the lining composition in the lining material is thermally cured, the curing may be carried out, for example, by feeding pressurized steam or hot water.

In the case where the lining composition in the lining material is photocured, a light source continuously emitting ultraviolet rays may be allowed to move at a constant rate in the pipeline to cure the pipe lining material so that a structure is produced inside the pipe. The time of irradiation from the light source is 0.05 hours to 1 hour depending on the effective wavelength range of the light source, output, irradiation distance, the thickness of the lining material, or other factors.

The lining may also be carried out by directly applying the lining composition to the object to be lined (target for lining) followed by heating or light irradiation. The heating or light irradiation may be carried out using the same method and conditions as described above in paragraph [0051].

The lining composition can be more uniformly applied to the object to be lined (target for lining) by using a spherical or capsule-shaped pig or applying pressure, or by suction airflow.

The present invention is described in greater detail with reference to, but not limited to, examples below.

The materials used in the examples and comparative example described later are listed below.

### Vinyl ester resin

Vinyl ester resin: Ripoxy VR-90 (bisphenol A-type vinyl ester resin, number average molecular weight = 1,000, softening point = 60°C) available from Showa Denko K.K.

### Initiator

Bis(4-tert-butylcyclohexyl) peroxydicarbonate: Perkadox 16 available from Kayaku Akzo Corporation
tert-Butyl peroxybenzoate: Perbutyl Z available from NOF Corporation

### Crosslinking agent

Diallyl phthalate : DAISO DAP monomer available from Osaka Soda Co., Ltd.
Diallyl maleate: a product of Wako Pure Chemical Industries, Ltd.
Diallyl fumarate: Synthesis Example 1
Diallyl succinate: Synthesis Example 2
Diallyl adipate: Synthesis Example 3
Diallyl itaconate: Synthesis Example 4
Diallyl 1,2-cyclohexanedicarboxylate: Synthesis Example 5
Diallyl 1,4-cyclohexanedicarboxylate: Synthesis Example 6
1,6-Hexanediol dimethacrylate: a product of Kyoeisha Chemical Co., Ltd.

### Synthesis Example 1: Synthesis of diallyl fumarate

A 500 mL flask was charged with 145.2 g (2.50 mol) of allyl alcohol, 137.5 (1.49 mol) of toluene, 116.1 g (1.00 mol) of fumaric acid, and 6.53 g (0.02 mol) of dodecylbenzenesulfonic acid, followed by stirring with a magnetic stirrer and reflux in an oil bath. Twenty-four hours later, heating was stopped, and the flask was cooled. The reaction solution was neutralized and washed with water, and the low-boiling components were evaporated using a rotary evaporator. The resulting condensate was distilled under reduced pressure to obtain 74.0 g of target diallyl fumarate. This compound was used in Example 2.

### Synthesis Example 2: Synthesis of diallyl succinate

A 500 mL flask was charged with 159.7 g (2.75 mol) of allyl alcohol, 151.3 (1.64 mol) of toluene, 110.1 g (1.10 mol) of succinic anhydride, and 7.18 g (0.022 mol) of dodecylbenzenesulfonic acid, followed by stirring with a magnetic stirrer and reflux in an oil bath. Eight hours later, heating was stopped, and the flask was cooled. The reaction solution was neutralized and washed with water, and the low-boiling components were evaporated using a rotary evaporator. The resulting condensate was distilled under reduced pressure to obtain 184.4 g of target diallyl succinate. This compound was used in Example 3.

### Synthesis Example 3: Synthesis of diallyl adipate

A 500 mL flask was charged with 159. 7 g (2. 75 mol) of allyl alcohol, 151.3 (1.64 mol) of toluene, 146.1 g (1.00 mol) of adipic acid, and 7.18 g (0.022 mol) of dodecylbenzenesulfonic acid, followed by stirring with a magnetic stirrer and reflux in an oil bath. Ten hours later, heating was stopped, and the flask was cooled. The reaction solution was neutralized and washed with water, and the low-boiling components were evaporated using a rotary evaporator. The resulting condensate was distilled under reduced pressure to obtain 181.0 g of target diallyl adipate. This compound was used in Example 4.

### Synthesis Example 4: Synthesis of diallyl itaconate

A 500 mL flask was charged with 275.9 g (4.75 mol) of allyl alcohol, 261.3 (2.83 mol) of toluene, 248.9 g (1.90 mol) of itaconic acid, and 12.41 g (0.038 mol) of dodecylbenzenesulfonic acid, followed by stirring with a magnetic stirrer and reflux in an oil bath. Thirty hours later, heating was stopped, and the flask was cooled. The reaction solution was neutralized and washed with water, and the low-boiling components were evaporated using a rotary evaporator. The resulting condensate was distilled under reduced pressure to obtain 145 g of target diallyl itaconate. This compound was used in Example 5.

### Synthesis Example 5: Synthesis of diallyl 1,2-cyclohexanedicarboxylate

A 500 mL flask was charged with 150.5 g (2.59 mol) of allyl alcohol, 160.5 (1.74 mol) of toluene, 200.0 g (1.30 mol) of 1,2-cyclohexanedicarboxylic anhydride, and 7.18 g (0.022 mol) of dodecylbenzenesulfonic acid, followed by stirring with a magnetic stirrer and reflux in an oil bath. Ten hours later, heating was stopped, and the flask was cooled. The reaction solution was neutralized and washed with water, and the low-boiling components were evaporated using a rotary evaporator. The resulting condensate was distilled under reduced pressure to obtain 124.1 g of target diallyl 1,2-cyclohexanedicarboxylate. This compound was used in Example 6.

### Synthesis Example 6: Synthesis of diallyl 1,4-cyclohexanedicarboxylate

A 500 mL flask was charged with 170.5 g (2.93 mol) of allyl alcohol, 150.1 (1.63 mol) of toluene, 241.1 g (1.40 mol) of 1,4-cyclohexanedicarboxylic acid, and 7.18 g (0.022 mol) of dodecylbenzenesulfonic acid, followed by stirring with a magnetic stirrer and reflux in an oil bath. Twenty hours later, heating was stopped, and the flask was cooled. The reaction solution was neutralized and washed with water, and the low-boiling components were evaporated using a rotary evaporator. The resulting condensate was distilled under reduced pressure to obtain 110.6 g of target diallyl 1,4-cyclohexanedicarboxylate. This compound was used in Example 7.

### Initiator-diluting agent

Diallyl phthalate : DAISO DAP monomer available from Osaka Soda Co., Ltd.

Table 1 shows the formulations of the vinyl ester resin compositions used in the examples and comparative example. The numerical values indicated in the formulation table are expressed in parts by weight, and the figures in parentheses are expressed in parts by weight per 100 parts by weight of the vinyl ester resin.

**[Table 1]**

| Unit: Parts by weight | | | | | | | | |
|---|---|---|---|---|---|---|---|---|
| | Comp. Ex. 1 | Ex. 1 | Ex. 2 | Ex. 3 | Ex. 4 | Ex. 5 | Ex. 6 | Ex. 7 |
| Resin | | | | | | | | |
| Vinyl ester resin | 55.0 (100) | 55.0 (100) | 55.0 (100) | 55.0 (100) | 55.0 (100) | 55.0 (100) | 55.0 (100) | 55.0 (100) |
| Crosslinking agent | | | | | | | | |
| Diallyl phthalate | 36.8 (66.9) | | | | | | | |
| Diallyl maleate | | 36.8 (66.9) | | | | | | |
| Diallyl fumarate | | | 36.8 (66.9) | | | | | |
| Diallyl succinate | | | | 36.8 (66.9) | | | | |
| Diallyl adipate | | | | | 36.8 (66.9) | | | |
| Diallyl itaconate | | | | | | 36.8 (66.9) | | |
| Diallyl 1,2-cyclohexanedicarboxylate | | | | | | | 36.8 (66.9) | |
| Diallyl 1,4-cyclohexanedicarboxylate | | | | | | | | 36.8 (66.9) |
| 1,6-hexanediol dimethacrylate | 8.2 (14.9) | 8.2 (14.9) | 8.2 (14.9) | 8.2 (14.9) | 8.2 (14.9) | 8.2 (14.9) | 8.2 (14.9) | 8.2 (14.9) |
| Initiator | | | | | | | | |
| Bis(4-tert-butylcyclohexyl) peroxydicarbonate | 0.550 (1.0) | 0.550 (1.0) | 0.550 (1.0) | 0.550 (1.0) | 0.550 (1.0) | 0.550 (1.0) | 0.550 (1.0) | 0.550 (1.0) |
| tert-Butyl peroxybenzoate | 0.275 (0.5) | 0.275 (0.5) | 0.275 (0.5) | 0.275 (0.5) | 0.275 (0.5) | 0.275 (0.5) | 0.275 (0.5) | 0.275 (0.5) |
| Initiator-diluting agent | | | | | | | | |
| Diallyl phthalate | 0.550 (1.0) | 0.550 (1.0) | 0.550 (1.0) | 0.550 (1.0) | 0.550 (1.0) | 0.550 (1.0) | 0.550 (1.0) | 0.550 (1.0) |

### Preparation of lining composition

According to the formulations indicated in Table 1, the vinyl ester resin and the crosslinking agent were weighed to a total weight of 50 g and mixed for 5 minutes in total using a planetary mill (MAZERUSTAR KK250S available from KURABO). The mixture was then stirred using the planetary mill with heating at 80°C to 90°C until the vinyl ester resin was dissolved in the crosslinking agent. Once the vinyl ester resin was dissolved in the crosslinking agent to give a homogeneous solution, heating and stirring were stopped, followed by cooling to room temperature. After the cooling to room temperature, the initiator diluted with the initiator-diluting agent was added, and they were stirred with the planetary mill while preventing the mixture from becoming heated to 30°C or higher, whereby a lining composition was prepared.

### Viscosity measurement

The viscosity of the lining compositions prepared as above was measured using an E-type viscometer BROOKFIELD RV DV2T at a cone angle of 3°, a radius of 12 mm, a temperature of 25°C, and a rotation speed of 1 rpm. Table 2 shows the results.

Table 3 shows the viscosities of the lining compositions after 0 hours from the preparation and after 18 hours of storage at 25°C.

### High temperature curability test

Each of the lining compositions was poured into a test tube with an outer diameter of 18 mm and a height of 165 mm (model No. P-18SM available from Nichiden-Rika Glass Co. Ltd.) to a height of 7.62 cm from the bottom of the tube. A K-type thermocouple was set in the center of the top of the poured resin (3.81 cm from the bottom). Then, the test tube was set in a hot oil bath at 65.5°C such that the liquid level of the poured resin was 1 cm below the liquid level of the oil bath. The gelation time (time within the temperature range of 60.0°C to 71.1°C), the cure time (time within the temperature range of 60.0°C to the maximum temperature), and the maximum temperature were recorded. Table 2 shows the results.

### Tensile modulus measurement

Cured lining composition samples with a size of 5 mm (length) × 22 mm (width) × 1 mm (thickness) were prepared and subjected to a tensile test in accordance with JIS K 7161. The tensile modulus was calculated from the slope of a stress-strain curve obtained in the tensile test. The samples were prepared by introducing each of the lining compositions into a block made of polydimethylsiloxane including a mold frame with the aforementioned size, and curing the lining composition in a constant-temperature oven at 80°C for 8 hours. The tensile test was carried out using a Strograph E3-L (Toyo Seiki Seisaku-sho, Ltd.) at a tensile rate of 20 mm/min. Table 4 shows the results.

**[Table 2]**

| | Comp. Ex. 1 | Ex. 1 | Ex.2 | Ex.3 | Ex. 4 | Ex. 5 | Ex. 6 | Ex. 7 |
|---|---|---|---|---|---|---|---|---|
| Viscosity (Pa·s) | 16.3 | 3.37 | 3.57 | 2.48 | 2.98 | 2.72 | 2.38 | 2.31 |
| Gelation time (min) | 11.0 | 6.7 | 5.8 | 7.1 | 6.4 | 9.1 | 9.7 | 7.2 |
| Curing time (min) | 14.6 | 11.7 | 9.5 | 9.6 | 8.5 | 16.0 | 12.2 | 9.4 |
| Maximum temperature (°C) | 82.5 | 86.0 | 127.5 | 86.5 | 91.9 | 111.1 | 94.3 | 102.3 |

**[Table 3]**

| | Comp. Ex.1 | Ex. 1 | Ex.2 | Ex.3 | Ex.4 | Ex.5 | Ex.6 | Ex.7 |
|---|---|---|---|---|---|---|---|---|
| 0 hours later (after preparation) | 16.3 | 3.37 | 3.57 | 2.48 | 2.98 | 2.72 | 2.38 | 2.31 |
| 18 hours later | 21.4 | 6.35 | 3.87 | 2.68 | 3.23 | 2.98 | 2.56 | 2.57 |

As shown in Table 2, the lining compositions of Examples 1 to 7 which contained a polyfunctional allyl ester selected from aliphatic polyfunctional allyl esters and alicyclic polyfunctional allyl esters had lower viscosity and excellent handleability as compared to Comparative Example 1. Thus, the results suggest that the polyfunctional allyl esters of formula (1) had excellent ability to dilute the vinyl ester resin. They are very useful because it is not necessary to add an excessive amount of crosslinking agent to reduce the viscosity, and therefore the physical properties of the cured product for lining will not be impaired.

The lining composition of Comparative Example 1 may be difficult to impregnate into substrates due to its high viscosity. In contrast, substrates can be readily impregnated with the lining compositions of Examples 1 to 7 having a low viscosity.

As also shown in Table 2, Examples 1 to 7 containing a polyfunctional allyl ester selected from aliphatic polyfunctional allyl esters and alicyclic polyfunctional allyl esters took shorter gelation time and shorter time to reach the maximum temperature (shorter cure time) as compared to Comparative Example 1, and therefore had excellent reactivity.

Furthermore, as shown in Table 2, the maximum temperature in Example 2 was high, which suggests that the reaction can be accelerated by the generated heat, so that the amount of crosslinking agents involved in the reaction increases to reduce the percentage of remaining unreacted crosslinking agents, and therefore the resulting cured product has good physical properties.

As shown in Table 3, Examples 1 to 7 containing a polyfunctional allyl ester selected from the aliphatic polyfunctional allyl esters and alicyclic polyfunctional allyl esters exhibited smaller changes in viscosity as compared to Comparative Example 1 and, therefore, excellent storage stability.

**[Table 4]**

| | Comp. Ex.1 | Ex. 1 | Ex.2 | Ex.3 | Ex.4 | Ex.5 | Ex.6 | Ex.7 |
|---|---|---|---|---|---|---|---|---|
| Tensile modulus (GPa) | 1.04 | 1.30 | 1.09 | 1.10 | 1.14 | 1.45 | 1.33 | 1.25 |

As shown in Table 4, Examples 1 to 7 containing a polyfunctional allyl ester selected from aliphatic polyfunctional allyl esters and alicyclic polyfunctional allyl esters had higher tensile modulus as compared to Comparative Example 1 and, therefore, they were excellent lining structural materials.

### INDUSTRIAL APPLICABILITY

The lining composition of the present invention is useful for rehabilitating the inner periphery of various existing pipes, including embedded pipes such as sewer pipes, water pipes, agricultural water pipes, and gas pipes.

## Claims

1. A lining composition, comprising:
a vinyl ester resin; and
a polyfunctional allyl ester selected from aliphatic polyfunctional allyl esters and alicyclic polyfunctional allyl esters.

2. The lining composition according to claim 1,
wherein the polyfunctional allyl ester selected from aliphatic polyfunctional allyl esters and alicyclic polyfunctional allyl esters is a polyfunctional allyl ester represented by the following formula (1):
Z(̵COOCH₂-CH=CH₂)ₙ ... (1)
wherein n represents an integer of 2 to 4, and z represents an n-valent aliphatic hydrocarbon group or an n-valent alicyclic hydrocarbon group, provided that z represents a bond only when n is 2.

3. The lining composition according to claim 1 or 2,
wherein the polyfunctional allyl ester selected from aliphatic polyfunctional allyl esters and alicyclic polyfunctional allyl esters is any one of diallyl succinate, diallyl fumarate, diallyl maleate, diallyl itaconate, diallyl adipate, or diallyl cyclohexanedicarboxylate.

4. The lining composition according to any one of claims 1 to 3,
wherein the lining composition comprises, per 100 parts by weight of the vinyl ester resin, at least 20 parts by weight but not more than 80 parts by weight of the polyfunctional allyl ester selected from aliphatic polyfunctional allyl esters and alicyclic polyfunctional allyl esters.

5. A lining material, comprising a substrate impregnated with the lining composition according to any one of claims 1 to 4.
